(19) Europäisches Patentamt
European Patent Office
Office européen des brevets

(11) **EP 1 659 867 B1**

(12) **EUROPÄISCHE PATENTSCHRIFT**

(45) Veröffentlichungstag und Bekanntmachung des Hinweises auf die Patenterteilung:
**21.02.2007 Patentblatt 2007/08**

(21) Anmeldenummer: **04764376.2**

(22) Anmeldetag: **23.08.2004**

(51) Int Cl.:
*A22C 13/00* *(2006.01)*

(86) Internationale Anmeldenummer:
**PCT/EP2004/009395**

(87) Internationale Veröffentlichungsnummer:
**WO 2005/020693 (10.03.2005 Gazette 2005/10)**

(54) **EIGENSTABIL GERAFFTE NAHRUNGSMITTELHÜLLE AUS KUNSTSTOFF**

INTRINSICALLY STABLE SHIRRED PLASTIC FOOD CASING

ENVELOPPE EN PLASTIQUE POUR PRODUITS ALIMENTAIRES CONTRACTEE AVEC UNE STABILITE PROPRE

(84) Benannte Vertragsstaaten:
**AT BE DE FR PL**

(30) Priorität: **27.08.2003 DE 10339801**

(43) Veröffentlichungstag der Anmeldung:
**31.05.2006 Patentblatt 2006/22**

(73) Patentinhaber: **Kalle GmbH**
**65203 Wiesbaden (DE)**

(72) Erfinder:
• **DELIUS, Ulrich**
  **60529 Frankfurt (DE)**

• **AUF DER HEIDE, Dirk**
  **49594 Althausen (DE)**
• **GROLIG, Gerhard**
  **64546 Mörfelden-Walldorf (DE)**

(74) Vertreter: **Plate, Jürgen et al**
**Zounek Plate Schweitzer**
**Patentanwaltskanzlei**
**Rheingaustrasse 196**
**65203 Wiesbaden (DE)**

(56) Entgegenhaltungen:
**EP-A- 0 573 306      EP-A- 0 640 289**
**EP-A- 1 013 173      WO-A-98/17120**
**US-A- 5 928 738**

EP 1 659 867 B1

**Beschreibung**

Die Erfindung betrifft eine geraffte, schlauchförmige Nahrungsmittelhülle auf Basis von thermoplastischem Kunststoff. Eine derartige Hülle ist aus z.B. EP-A-0 640 289 bekannt. Sie eignet sich insbesondere zur Herstellung von Koch- und Brühwürsten sowie von Würstchen auf automatischen Abfüllanlagen.

Nahrungsmittelhüllen, insbesondere Wursthüllen, werden häufig in einer Form angeboten, bei der jeweils ca. 15 bis 100 m der Hülle zu 20 bis 120 cm langen "Raupen" (engl. "stick", "strand" oder "slug") zusammengeschoben sind. Das Raffen von Kunstdärmen ist seit langem bekannt und auch beschrieben (s. G. Effenberger: Wursthüllen - Kunstdarm, H. Holtzmann Verlag GmbH & Co KG, Bad Wörishofen, 2. Aufl. [1991] S. 58 bis 60). Es erfolgt auf sogenannten Raffmaschinen. Vor dem Raffen ist die Hülle flachgelegt und aufgerollt. Sie wird von der Rolle abgezogen, aufgeblasen und auf den sog. Raffdorn aufgezogen. Der Außendurchmesser des Raffdorns bestimmt die Innendurchgangsweite der zu erzeugenden Raupe. Um den Raffdorn herum ist ein angetriebenes sog. Raffwerkzeug angeordnet, das die Hülle an der äußeren Oberfläche greift, sie axial auf dem Raffdorn weitertransportiert und dabei in gleichmäßige Falten legt. Die Raffwerkzeuge können unterschiedlich konstruiert sein. Bekannt sind z.B. Anordnungen von Raffrädern, die außen gezähnt oder auch glatt geformt sein können, daneben auch Raffbänder und Wendelraffelemente. Die Reibung an Raffdorn und Raffwerkzeug stellt eine hohe thermisch-mechanische Belastung für die Hülle dar. Unmittelbar vor oder während des Raffens wird sie daher üblicherweise von innen, von außen oder von beiden Seiten mit einem Schmiermittel (Öl, Wasser oder entsprechende Emulsionen) benetzt. Damit wird u.a. verhindert, daß an den Falten Risse oder sonstige Vorschädigungen entstehen. Raffbeschädigungen können auch auftreten, wenn der Komprimierungsgrad (Preßdichte = Hüllenlänge pro Raupe) zu hoch gewählt ist. Sobald die gewünschte Länge an Hüllenmaterial das Raffwerkzeug durchlaufen hat, wird die Hülle an der Zuführung abgeschnitten und die entstandene Raupe vom Raffdorn heruntergeschoben.

Die so entstandene Raupe sollte möglichst formstabil, selbsttragend und mechanisch so robust sein, daß sie den Transport, das Verpacken und die weitere Handhabung beim Verarbeiter problemlos übersteht. Beim Füllen mit Wurstmasse wird die Raupe wieder kontrolliert "entrafft". Dazu werden oft mehrere Raupen in einen Vorratsbehälter gelegt, aus dem einzelne Exemplare nacheinander automatisch entnommen und auf das Füllrohr der Füllmaschine aufgeschoben werden. Hierbei ist es unabdingbar, daß die Raupe nicht bricht und daß ihre vorgegebene Form unverändert erhalten bleibt. Andernfalls kommt es zu Störungen im automatischen Ablauf des Füllvorgangs, der umständlich von Hand behoben werden muß.

Die Fähigkeit von Hüllen zur Bildung eigenstabiler Raupen ist - abhängig vom verwendeteten Werkstoff - sehr unterschiedlich. Heute werden überwiegend Wursthüllen auf Basis folgender Werkstoffe verwendet:

- regenerierte Cellulose
- Kollagen
- thermoplastische Kunststoffe, hiervon insbes. PVDC, Polyamid, letztere auch in Form von Mehrschichtstrukturen mit zusätzlichen Schichten aus Polyolefinen und anderen Kunststoffen

Allein Hüllen aus Celluloseregenerat lassen sich (in Grenzen) zu eigenstabilen Raupen verarbeiten. Vorteil der Cellulose ist hier eine gewisse Neigung zur Bildung "stehender Falten" (ähnlich Papier). Voraussetzung ist eine definierte Feuchte des zu raffenden Schlauchs, um ein geeignetes Verhältnis aus Steifigkeit und Geschmeidigkeit zu erreichen. Vielfach werden Hüllen aus Celluloseregenerat vor dem Raffen innen mit einer Imprägnierung bzw. Lösungsbeschichtung versehen. Diese Behandlungen dienen in erster Linie dazu, gezielt die Haftung der Hülle auf der Wurstoberfläche einzustellen bzw. ein leichtes späteres Ablösen der Hülle zu ermöglichen. Eine Vielzahl von Imprägnier-bzw. Beschichtungsmitteln wurde bereits beschrieben, darunter auch solche, die zusätzlich eine gewisse "Verklebung" der späteren Raff-Falten aneinander bewirken und die Raupe dadurch zusätzlich stabilisieren.

Die bekannten Imprägnier- bzw. Beschichtungrezepturen basieren zumeist auf wasserlöslichen und/oder in Wasser emulgierbaren Stoffen und werden als wäßrige Zubereitung in die Hülle eingebracht. Man macht sich hier das hohe Quellvermögen der Cellulose zunutze; infolgedessen wird (bei nicht zu hoher Eigenfeuchte der Hülle) der Wasseranteil der eingebrachten Zubereitung umgehend von der Cellulose absorbiert, und die Inhaltstoffe bilden nach kurzer Zeit einen trockenen Belag auf der Oberfläche. Im Falle von "klebenden" Inhaltsstoffen wird das Raffen unmittelbar nach dem Beschichten durchgeführt, so daß die Verfestigung der Stoffe bzw. die Verklebung der Oberflächen erst an den fertigen Raupen stattfindet.

Beispiele für solche "klebenden" Beschichtungsrezepturen bei Cellulosehüllen sind:

- wasserlösliche Celluloseether in Kombination mit einem Öl oder einem Alkylenoxid-Addukt eines Fettsäurepartialesters (US-A 3 898 348),
- wasserlösliche Celluloseether in Kombination mit einem Fettsäure-Teilester des Sorbitans oder Mannits und einem wasserlöslichen Polyalkylenether (US-A 4 137 947),
- Gemische aus anionischen und nicht ionischen wasserlöslichen Celluloseethern und Gleitmittel (EP-A 0 180 207),

- Lecithin in Kombination mit mindestens einem der Stoffe Alginat, Chitosan, Casein (US-A 5 358 784),
- Mischungen von Carboxymethylcellulose (CMC) und Polyethylenglykol, gegebenenfalls kombiniert mit Polysorbat, Sorbitan-oleat, Methylcellulose (MC), Lecithin, oder Mineralöl (US-A 6 086 929).

Im Gegensatz zu den Hüllen auf Basis von regenerierter Cellulose gelten Hüllen aus Kunststoff gemeinhin als untauglich für die Herstellung eigenstabiler Raupen. Geraffte Kunststoffhüllen werden nach dem Entfernen vom Raffdorn umgehend mit einem schlauchförmigen Netz oder mit einer Folie überzogen. Andernfalls kommt es zu einer unerwünschten Expansion der Raupen in Längsrichtung (Entkomprimierung), gefolgt von einem Öffnen einzelner Falten bis hin zum völligen Formverlust. Dieser Netz- oder Folienüberzug muß vom Verarbeiter manuell entfernt werden, sobald die Raupe auf das Füllrohr der Füllmaschine aufgeschoben wurde. Der Arbeitsschritt des Entfernens ist insbesondere deswegen unerwünscht, weil er sich nicht zuverlässig automatisieren läßt und insofern der Füllprozeß insgesamt nicht vollautomatisch durchzuführen ist.

Weiterhin ist es bekannt, Kunststoffhüllen auf eine Hülse zu raffen und das geraffte Material mit Begrenzungsscheiben zu fixieren (Effenberger, a.a.O., S. 58). Das ist umständlich und deshalb nachteilig.

Die oben bei den Hüllen aus Celluloseregenerat diskutierten Möglichkeiten zur Stabilisierung der Raupen sind bei üblichen Kunststoffhüllen nicht anwendbar. Zum einen besitzen die für Wursthüllen geeigneten Kunststoffe-(Polyamid, PVDC) ausgeprägt elastische Rückverformungseigenschaften; eine in eine Folie eingeprägte Falte "öffnet" sich bereitwillig, und die Folie nimmt annähernd wieder ihre planare Form an. Zum anderen besitzen Kunststoffe im Vergleich zu Cellulose kaum Quellvermögen und nurgeringe Wasserdampfpermeation. Eine innen aufgebrachte Imprägnierung oder Beschichtung würde über lange Zeit feucht bleiben und nicht die gewünschte "Verklebung" der Raff-Falten nach dem Raffprozeß bewirken.

Den Vorteilen von Hüllen aus Celluloseregenerat steht leider ihre technisch aufwendige und umweltbelastende Herstellung entgegen. Sie werden in der Regel nach dem Viskoseverfahren hergestellt, bei dem Cellulose zunächst mit Hilfe von Natronlauge und Schwefelkohlenstoff ($CS_2$) in Cellulosexanthogenat umgewandelt wird. Die dabei entstehende sogenannte Viskoselösung muß zunächst mehrere Tage reifen, bevor sie den Darmspinnmaschinen zugeleitet wird. Diese Maschinen bestehen im wesentlichen aus einer Spinndüse, Fällbädern, Wasch- und Präparationsbädern sowie Trockenstationen. In den Fällbädern wird das Cellulosexanthogenat zu Cellulose regeneriert. Als Nebenprodukte fallen Schwefelwasserstoff ($H_2S$) und Natriumsulfat an. Diese Stoffe müssen kontinuierlich abgefangen und entsorgt werden.

Hüllen aus üblichen thermoplastischen Kunststoffen sind dagegen technisch einfach und kostengünstig herstellbar. Die üblichen Kunststoffe wie Polyamid und Polyethylen können verarbeitungsfertig von den Herstellern bezogen und durch Extrusion und Schlauchblasen oder Schlauchstreckverfahren direkt zu Hüllen umgeformt werden.

Es stellte sich damit die Aufgabe, eine eigenstabile, ohne Netz- oder Folienüberzug auskommende Raupe auf Basis einer Kunststoffhülle bereitzustellen. Die entsprechende Hülle sollte zur Herstellung von Koch- und Brühwurst sowie zur Herstellung von Würstchen geeignet sein. Darüberhinaus sollte die Hülle auf üblichem thermoplastischem Weg und damit kostengünstig herstellbar sein.

Gelöstwurde die Aufgabe mit einer gerafften, schlauchförmigen Nahrungsmittelhülle auf Basis von thermoplastischem Kunststoff, die dadurch gekennzeichnet ist, daß der thermoplastische Kunststoff ein Blend aus mindestens einem Polyamid und/oder Copolyamid und mindestens einer hydrophilen Komponente umfaßt, daß die Hülle biaxial streckorientiert ist und daß sie innen und/oder außen mit einer Komponente imprägniert ist, die die Falten der Hülle aneinander haften läßt. Die hydrophile Komponente verleiht der Hülle ein so hohes Quellvermögen, daß sie Wasser aus der in Form einer wäßrigen Zusammensetzung aufgebrachten Imprägnierung umgehend absorbiert, so daß schon unmittelbar nach dem Raffen eine Verklebung der Raff-Falten eintritt. Erreicht wird dadurch, das die Längsexpansion der Raupen, bestimmt nach dem unten spezifizierten Meßverfahren, nicht mehr als 8 %, bevorzugt 6 % oder weniger beträgt. Die erfindungsgemäße Raffraupe ist außerordentlich stabil. Bei Zugrundelegung eines Kalibers von 38 mm bricht sie erst (unter den ebenfalls unten beschriebenen Meßbedingungen) unter der Einwirkung einer Kraft von100 N oder mehr, bevorzugt 120 N oder mehr. Sie ist nicht mit einer Raffhülse oder einem ähnlichen Hilfsmittel kombiniert.

Für die erfindungsgemäße Raffraupe wird vorzugsweise eine Hülle auf Basis eines Blends von Polyamid(en) und/oder Copolyamid(en) und mindestens einer hydrophilen Komponente verwendet. Als (Co-)polyamide kommen hier in erster Linie aliphatische (Co)polyamide in Betracht. Das sind insbesondere lineare aliphatische (Co)Polyamide, wie Polyamid-6 (Poly(ε-caprolactam) = Homopolymer aus ε-Caprolactam bzw. 6-Aminohexansäure), PA-6/6.6 (Copolyamid aus ε-Caprolactam, Hexamethylendiamin und Adipinsäure), PA-6/6.9 (Copolyamid aus ε-Caprolactam, Hexamethylendiamin und Azelainsäure), PA-6/66.12 (Copolyamid aus ε-Caprolactam, Hexamethylendiamin, Adipinsäure und Laurinlactam), PA-6.9 (Polyamid aus Hexamethylendiamin und Azelainsäure), PA-6.1 0 (Polyhexamethylensebacinamid = Polyamid aus Hexamethylendiamin und Sebacinsäure), PA-6/12 (Polyamid aus ε-Caprolactam und ω-Aminolaurinsäurelactam) und PA-12 (Poly(ε-laurinlactam) = Homopolymer aus ω-Aminolaurinsäurelactam).

Als hydrophile Komponente kommen natürliche und synthetische Polymere mit ausgeprägter Quellfähigkeit oder Löslichkeit in Wasser in Frage. Die natürlichen oder synthetischen Polymere sollten dementsprechend mindestens 20 Gew.-%, bevorzugt mindestens 40 Gew.-%, ihres Eigengewichts an Wasser aufnehmen können. Unter den synthetischen Polymeren sind geeignet:

1) heterofunktionelle Polyamide, insbesondere Polyetheramide, Polyesteramide, Polyetheresteramide und Polyamidurethane. Speziell geeignet unter diesen Polymeren sind solche mit blockartiger Verteilung der verschiedenen Funktionalitäten, d.h. Blockcopolymere. Besonders bevorzugte Blockcopolymere sind Poly(ether-block-amide), gekennzeichnet durch folgende Strukturelemente:

a) mindestens ein Amidanteil mit Einheiten

a1) aus mindestens bifunktionellen aliphatischen und/oder cycloaliphatischen Aminen (speziell Hexamethylendiamin oder Isophorondiamin) und aus mindestens bifunktionellen aliphatischen und/oder cycloaliphatischen und/oder aromatischen Carbonsäuren (speziell Adipinsäure, Sebacinsäure, Cyclohexandicarbonsäure, Isophthalsäure oder Trimellitsäure), oder
a2) aus aliphatischen Aminocarbonsäuren, insbesondere ω-Aminocarbonsäuren, oder deren Lactamen (speziell ε-Caprolactam oder ω-Laurinlactam) oder
a3) Mischungen von a1) und a2) <u>und</u>

b) mindestens einen Glykol- oder Polyglykolanteil mit Einheiten

b1) aus einem mindestens bifunktionellen, aliphatischen und/oder cycloaliphatischen Alkohol mit 2 bis 15 Kohlenstoffatomen, insbesondere 2 bis 6 Kohlenstoffatomen (speziell Ethylenglykol, Propan-1,2-diol, Propan-1,3-diol, Butan-1,4-diol oder Trimethylolpropan) oder
b2) aus einem Oligo- oder Polyglykol aus einem oder mehreren der in b1) genannten Alkohole (speziell Diethylenglykol, Triethylenglykol, Polyethylenglykol oder Poly(1,2-propylenglykol) oder
b3) aus mindestens einem aliphatischen Oligo- oder Polyglykol der in b2) genannten Art, deren endständige Hydroxygruppen durch Aminogruppen ersetzt sind (®Jeffamine) oder
b4) aus eine Mischung von b1), b2) und/oder b3) oder
b5) aus einem esterhaltigen polyglykolischen Anteil, gebildet aus mindestens bifunktionellen, aliphatischen Alkoholen (speziell Ethylenglykol oder 1,2-Propylenglykol) und mindestens zweiwertigen aliphatischen, cycloaliphatischen und/oder aromatischen Dicarbonsäuren (speziell Adipinsäure, Sebacinsäure oder Isophthalsäure) oder
b6) aus einer Mischung von b1), b2) und/oder b5);

2) Co-Polyetherester, bevorzugt Poly(ether-ester)-Blockcopolymere, gekennzeichnet durch folgende Strukturelemente:

a) mindestens eine Dicarbonsäureeinheit, insbes. Einheiten der Phthalsäure, Isophthalsäure, Terephthalsäure, Naphthalin-2,6-dicarbonsäure, Naphthalin-2,7-dicarbonsäure, Glutarsäure, Adipinsäure, Sebazinsäure und Cyclohexan-1,4-dicarbonsäure und
b) mindestens einem Glykol- , Oligo- oder Polyglykolanteil mit Einheiten

b1) aus einem mindestens bifunktionellen, aliphatischen und/oder cycloaliphatischen Alkohol mit 2 bis 15 Kohlenstoffatomen, insbesondere 2 bis 6 Kohlenstoffatomen (speziell Ethylenglykol, Propan-1,2-diol, Propan-1,3-diol, Butan-1,4-diol oder Trimethylolpropan) und/oder
b2) aus einem Oligo- oder Polyglykol aus einem oder mehreren der in b1) genannten Alkohole (speziell Diethylenglykol, Triethylenglykol, Polyethylenglykol oder Poly(1,2-propylenglykol);

3) wasserlösliche synthetische Polymere, vorzugsweise

a) Polyvinylalkohole (PVAL), wie sie erhältlich sind durch teilweise oder vollständige Verseifung von Polyvinylacetat (PVAC), oder Copolymere mit Vinylalkohol-Einheiten (beispielsweise ein Copolymer mit Einheiten aus Vinylalkohol und Propen-1-ol),
b) Polyalkylenglykole, insbesondere Polyethylenglykole, Polypropylenglykole oder entsprechendes Copolymere mit Alkylenglykol-Einheiten, insbesondere Ethylenglykol- und/oder Propylenglykol-Einheiten, und Einheiten von anderen Monomeren,
c) Polyvinylpyrrolidon oder wasserlösliche Copolymere mit Vinylpyrrolidon-Einheiten und Einheiten aus mindestens einem α,β-olefinisch ungesättigtem Monomer,
d) Polymerisate von N-Vinylalkylamiden, z.B. Poly(N-vinylformamid), Poly-(N-vinylacetamid) und Copolymere mit Einheiten von N-Vinylalkylamiden und Einheiten aus mindestens einem a,β-olefinisch ungesättigten Monomer oder

e) (Co-)Polymere aus bzw. mit Einheiten von α,β-ungesättigten Carbonsäuren oder α,β-ungesättigten Carbonsäureamiden, insbesondere mit Einheiten von (Meth)acrylsäure und/oder (Meth)acrylamid.

4) Unter den natürlichen Polymeren sind geeignet: natürliche hydrophile Polymere, insbes. Polysaccharide, z.B. Stärke (nativ oder destrukturiert, im letzteren Fall mit Weichmacherzusätzen, wie Glycerin), Cellulose (in Form von Pulvern oder Kurzfasern, wobei die Kurzfasern nativen Ursprungs oder durch Viskose-Verspinnung gewonnene Fasern sein können), Exo-Polysaccharide (wie Carrageenan, Locust Bean Gum oder Guar Gum) und Polysaccharid-Derivate (wie vernetzte Stärke, Stärkeester, Celluloseester, Celluloseether oder Carboxyalkylcelluloseether).

Innerhalb vorangegangener Aufzählung sind (1) und (3) bevorzugt. Besonders bevorzugt sind Poly(ether-block-amide) aus Einheiten gemäß 1)a3) und 1)b2), Polyvinylalkohole gemäß 3a) mit einem mittleren Molekulargewicht $\bar{M}_w$ von 10.000 bis 50.000 und einem Verseifungsgrad der Acetatgruppen im Bereich 75 bis 98% sowie Mischungen aus diesen zwei Polymertypen.

Gegebenenfalls enthält die Hülle noch übliche Additive, wie Stabilisatoren, Gleitmittel, Antiblockpigmente, anorganische oder organische Farbpigmente sowie Plastifizierhilfsmittel wie Glycerin, letztere insbesondere dann, wenn Stoffe gemäß 4) verwendet werden.

Die zu den erfindungsgemäßen Raffraupen konfektionierte Hülle zeigt allgemein eine Wasseraufnahmefähigkeit von 10 bis 50 Gew.-%, bezogen auf ihr Trockengewicht. Zur Bestimmung der Wasseraufnahmefähigkeit wird eine Probe 2 Stunden lang in Wasser mit einer Temperatur von 23 ˚C eingelegt. Anschließend wird die Oberfläche der Probe trockengewischt. Der Wasseranteil wird dann durch Karl-Fischer-Titration bestimmt.

Streckorientierte Hüllen auf Basis von Mischungen von Polyamid(en) und hydrophilen Polymeren sind bereits bekannt. Beispielsweise sind in der DE-A 101 25 207 Hüllen beschrieben auf Basis von Mischungen aus aliphatischen (Co-)Polyamiden und Glykol- und/oder Polyglykol-modifizierten Polyamiden. In der WO 02/082913 sind dagegen Hüllen offenbart, die Polyamid und einen Blockcopolyetherester enthalten.

Die dann zu Raffraupen konfektionierte schlauchförmige, nahtlose Hülle wird nach Verfahren hergestellt, die dem Fachmann bekannt sind. Darin wird allgemein ein Blend aus dem Polyamid bzw. den Polyamiden, mindestens einer der vorgenannten hydrophilen Komponenten sowie gegebenenfalls Additiven zu einem nahtlosen Schlauch extrudiert, der dann einem Reckprozeß unterworfen wird. Der Blend wird im einfachsten Fall durch mechanisches Durchmischen der granulären Komponenten und anschließendes Aufschmelzen und Homogenisieren des Gemisches im Folienextruder erzeugt. In einigen Fällen ist es zweckmäßig, die hydrophile(n) Komponente(n) zunächst mit einem oder mehreren Plastifizierhilfsmitteln, z.B. Glycerin, Ethylenglykol, Wasser, vorzumischen und zu plastifizieren. Dieser Prozeß erfolgt z.B. in einem beheizbaren Rührkessel, in dem die hydrophile(n) Komponente(n) mit dem/den Weichmacher(n) vorgelegt und unter Rühren erwärmt wird (ca. 120˚C), bis eine gleichmäßige Verteilung des/der Weichmacher(s) eingetreten ist. Das nach dem Abkühlen angefallene Produkt kann direkt dem obengenannten Extruder zugeführt oder zuvor zu Granulat umgearbeitet werden.

Nach dem Schmelzen und Homogenisieren im Extruder wird der Blend durch eine Ringdüse geführt, wobei sich ein Primärschlauch mit relativ hoher Wandstärke bildet. Dieser Schlauch wird rasch abgekühlt, um den amorphen Zustand der Polymere einzufrieren. Anschließend wird er wieder auf eine zum Verstrecken geeignete Temperatur erwärmt (etwa 60 bis 90˚C) und mittels eines zwischen zwei angetriebenen Quetschwalzenpaaren eingeschlossenen Luftpolsters in Querrichtung verstreckt. Der Querverstreckung wird eine Längsverstreckung überlagert. Dies geschieht üblicherweise, indem man beim zweiten Quetschwalzenpaar eine gegenüber dem ersten Paar höhere Umfangsgeschwindigkeit einstellt. Das Flächenstreckverhältnis (= Produkt aus Quer- und Längsstreckverhältnis) beträgt etwa 6 bis 18, bevorzugt 8 bis 11. Die Wandstärke der Hülle liegt dann im Bereich von 12 bis 60 μm, bevorzugt von 20 bis 45 μm. Die Hülle ist allgemein einschichtig. Da die Hülle in erster Linie für Koch- und Brühwürste sowie für Würstchen vorgesehen ist, hat sie ein Nennkaliber in der Regel von 14 bis 48 mm, bevorzugt 18 bis 40 mm.

Nach dem Verstrecken wird der Schlauch zweckmäßig noch thermofixiert. Durch die Thermofixierung läßt sich das Schrumpfverhalten gezielt einstellen. Schließlich wird der Schlauch abgekühlt, flachgelegt und zu Rollen aufgewickelt.

Ein weiteres Merkmal der vorliegenden Erfindung ist die Imprägnierung bzw. Benetzung der schlauchförmigen Hülle mit einer Haftkomponente, die bevorzugt mindestens eine hochmolekulare Verbindung mit Hafteigenschaften und gegebenenfalls weitere Komponenten umfaßt. Als hochmolekulare Verbindungen sind wasserlösliche Polymere geeignet, deren Lösungen beim Trocknen klebrig werden, d.h. die eine starke Adhäsion zu angrenzenden Schlauchoberflächen ausbilden und geeignet sind, beim anschließenden Raffen gebildetete Falten mechanisch gegeneinander zu stabilisieren. Besonders geeignet sind wasserlösliche Celluloseether, speziell Methylcellulose (MC), Carboxymethylcellulose (CMC), Carboxymethyl-hydroxyethylcellulose (CM-HEC), Hydroxyethylcellulose (HEC), Methylhydroxyethylcellulose (M-HEC) sowie die Natriumsalze der CMC und CM-HEC. Bevorzugt sind M-HEC und CMC-Natriumsalz. Ebenfalls geeignete Polymere, insbesondere in Kombination mit einem Celluloseether, sind Polyalkylenglykole, bevorzugt Polyethylenglykol mit einem Molekulargewicht $M_n$ im Bereich 200 bis 1500, weiterhin Mono- und Dialkylether von Polyalkylenglykolen.

Zur Erzielung des gewünschten Verklebungseffektes genügen bereits geringe Auftragsmengen an Polymeren. Die exakte Menge richtet sich unter anderem nach der gewünschten Stabilität der späteren Raupen. Allgemein sollte die Hülle mit etwa 2 bis 500 mg/m$^2$, bevorzugt etwa 20 bis 250 mg/m$^2$, besonders bevorzugt etwa 50 bis 150 mg/m$^2$, an Polymer(en) mit Haftungseigenschaften imprägniert sein.

Die Imprägnierung kann wahlweise auf die äußere oder innere Schlauchoberfläche oder auch auf beide Oberflächen aufgebracht werden. Bevorzugt ist sie auf der inneren Oberfläche aufgebracht. Das eröffnet die Möglichkeit, die Imprägnierung so zu wählen, daß gleichzeitig die Haftung des Wurstbräts an der Oberfläche bzw. die spätere Abschälbarkeit der Hülle in der gewünschten Weise eingestellt wird.

Um die Abschälbarkeit der Hülle von dem Nahrungsmittel zu verbessern, bieten sich Imprägnierungen aus Polymer(en) der obengenannten Art in Kombination mit anderen wasserlöslichen oder in Wasser emulgierbaren Stoffen an, z.B. Fettsäurepartialester von Glycerin, anderen Polyolen oder Glucosiden, weiterhin Naturstoffe wie Lecithin, Casein, Alginsäure und deren Salze, Pflanzen-, Mineral- und Silikonöle. Diese weiteren Stoffe sollten in geringerer Konzentration verwendet werden als die vorgenannten wasserlöslichen Polymere. Bevorzugt sind Kombinationen aus einem oder zwei wasserlöslichen Polymer(en) mit einem Glycerin-Fettsäure-partialester und einem Öl. Besonders bevorzugt ist die Kombination von CMC-Natriumsalz als Hauptkomponente mit einem Glycerin-Fettsäuremonoester, Lecithin und Paraffinöl.

Erzeugt wird die Imprägnierung zweckmäßig durch Behandeln des Schlauchs mit einer wäßrigen Lösung oder einer Öl-in-Wasser-Emulsion unmittelbar vor oder während des Raffprozesses. Vorzugsweise ist die Beschichtungsvorrichtung in die Raffmaschine integriert und so angeordnet, daß die Beschichtung zeitlich weniger als eine Sekunde vor dem Raffvorgang aufgebracht wird. Zur Beschichtung der Außenoberfläche kommt als Verfahren ein kontinuierliches Führen des Schlauchs durch ein Tauchbad mit der Lösung oder ein Besprühen des Schlauchs mittels Zerstäuberdüsen in Frage. Eine Beschichtung der inneren Oberfläche erfolgt am besten durch Besprühen mit einer radial wirkenden Düse, die an dem zur Schlauchzuführung hingewandten Ende des Raffdorns angebracht ist. Raffmaschinen mit derartiger "Innendornbesprühung" sind z. B. in der US-A 3 451 827 beschrieben.

Die Beschichtungslösung sollte möglichst hoch konzentriert angewendet werden, um ein zügiges Eindicken der Beschichtung auf der Schlauchoberfläche und damit ein rasches Einsetzen der Verklebung zu erreichen. Nach oben ist die Lösungskonzentration anhand der Viskosität der Lösung begrenzt. Allzu viskose Lösungen lassen sich nicht mehr gleichmäßig bzw. nur mit hohem technischen Aufwand versprühen. Typische Lösungen zur Innenbesprühung enthalten etwa 1 bis 3 Gew.-% Celluloseether.

Für das Raffen der beschichteten Hülle eignen sich prinzipiell alle Raffverfahren nach dem Stand der Technik. Bevorzugt sind Verfahren, bei denen die Schlauchverdichtung mittels Raffrädern erfolgt (auch Paddel- oder Axialverfahren genannt). Besonders bevorzugt sind Verfahren mit rotierenden, innenseitig als Wendel ausgebildeten Raffelementen (auch Schneckenverfahren genannt). Weiterhin bevorzugt sind sog. Mehrdornmaschinen, bei denen mehrere Raffdorne beweglich (z. B. auf einer Revolverscheibe) angeordnet sind und umlaufend im Wechsel mit dem Raffelement in Eingriff gebracht werden. Diese Systeme haben den Vorteil, daß die eben entstandenen Raupen noch eine gewisse Zeit auf dem jeweiligen Raffdorn verbleiben und durch diesen bis zum Einsetzen der Verklebung stabilisiert werden. Das Raffverhältnis (= Kompressionsfaktor) beträgt allgemein 80 : 1 bis 500 : 1, bevorzugt 100 : 1 bis 400 : 1. Das Raffverhältnis wird dabei mit bestimmt durch die Wandstärke und das Kaliber der Hülle.

Raffmaschinen mit integrierter Beschichtungsvorrichtung sind bevorzugt. Speziell bevorzugt sind Maschinen mit Beschichtungstechnik nach dem Innnendornsprühverfahren; bei diesen wird die Beschichtungslösung durch Bohrungen innerhalb des Raffdorns transportiert und über eine Düse, die an dem zur Schlauchzuführung hingewandten Ende des Raffdorns angeordnet ist, radial gegen die Innenoberfläche des sich bewegenden Schlauchs gesprüht.

Verwendung findet die erfindungsgemäße geraffte Nahrungsmittelhülle insbesondere bei der Herstellung von Koch- und Brühwürsten sowie von Würstchen auf vollautomatisch arbeitenden Wurstfüll- und Clip-Vorrichtungen.

Die nachfolgenden Beispiele dienen zur Illustration der Erfindung. Prozente sind darin Gewichtsprozente, soweit nicht anders angegeben oder aus dem Zusammenhang ersichtlich.

**Beispiele**

Meßgrößen

*Wasseraufnahme:*

Proben des Schlauchmaterials werden aufgeschnitten und für 2h in Wasser bei 23°C gelagert, anschl. herausgenommen, mit Papiertüchern oberflächlich trocken gewischt und bis zur Vermessung in PE-Beuteln gelagert. Die Bestimmung des Wassergehalts erfolgt durch Titration nach Karl-Fischer.

*Längs-Expansion der Raupen:*

Aus der Raffmaschine ausgeworfene Raupen werden locker mit den Händen gegriffen und auf einer ebenen Unterlage deponiert. Nach 10 Minuten wurde mit einem Lineal der Abstand zwischen den Raupenenden ermittelt. Etwaiges lockeres Hüllenmaterial an den Raupenenden wird nicht mitgemessen. Je Versuch werden die Meßwerte von 5 Raupen gemittelt. Die Längs-Expansion ergibt sich zu:

$$\Delta = \underline{\frac{\text{gemessene Raupenlänge} - \text{Preßlänge maschinenseitig}}{\text{Preßlänge maschinenseitig}}} * 100 \quad [\%]$$

*Bruchkraft (der Raupen):*

Eine mechanisches Prüfgerät vom Typ Zwick 1445 wird mit mit einem Bruchprüfungs-Werkzeugsatz bestückt. Dieser besteht aus zwei feststehenden prismatisch geformten Auflageböcken mit einem lichten Abstand von 115 mm sowie einem beweglichen, mit der Kraftmeßvorrichtung verbundenen Druckstempel. Der Druckstempel besitzt die Form eines flachen Keils, dessen Schneide einen Verrundungsradius von 5 mm besitzt. Die Schneide ist parallel zur Ebene der Auflageböcke und mittig zwischen diesen ausgerichtet.

Eine Raupe wird auf den Auflageböcken plaziert; anschließend fährt der Druckstempel mit einer Geschwindigkeit von 10 mm/min gegen die Raupe und setzt seinen Weg bis zum Knicken der Raupe fort. Die aufgewandte Kraft wird kontinuierlich registriert und graphisch dargestellt. Die Bruchkraft ist definiert als die Maximalkraft bis zur ersten Unstetigkeit der Kraft-Weg-Kurve (Beginn des Bruchvorgangs).

Einsatzstoffe

| | |
|---|---|
| PA1: | Polyamid 6 mit einer relativen Viskosität von 4 (gemessen in 96 %iger Schwefelsäure), ®Ultramid B4 der BASF AG |
| PA2: | Polyamid 6/66 (Gewichtsverhältnis 85 : 15 Gewichtsteile) mit einer relativen Viskosität von 4 (gemessen in 96%iger Schwefelsäure), ®Ultramid C4 der BASF AG |
| PEA: | Copolymer auf Basis von ε-Caprolactam, Hexamethylendiamin, Adipinsäure und Polyethylenglykol (mit durchschnittlich etwa 10 Ethylenglykol-Einheiten); Schmelzpunkt 210 ˚C (bestimmt durch Differential Scanning Calorimetry, DSC), ®Grilon FE 7012 der Ems-Chemie AG, |
| PVAL: | Polvinylalkohol mit einem Molekulargewichtsmittel $\bar{M}_W$ von 26.000 und einem Verseifungsgrad von 88% (®Mowiol 26-88 der Clariant Deutschland GmbH) |
| Glycerin | 96 %ig, Reinheit gemäß DAB (Deutsches Arzneimittelbuch) |
| MB | Füllstoff-Masterbatch bestehend aus 50 % Polyamid 6 und 50 % feinteiligem Calciumcarbonat (HT-MAB-PA 9098 der Fa. Treffert) |
| CMC-Na | Natriumsalz einer Carboxymethylcellulose mittleren Veretherungsgrades und einer Lösungsviskosiät von 10 Pa s, gemessen an 2%iger Lösung bei 20˚C per Höppler-Viskosimeter (®Tylopur C 10000 P2 der Clariant Deutschland GmbH) |
| M-HEC | Methyl-hydroxyethyl-cellulose mittleren Veretherungsgrades und einer Lösungsviskosiät von 4 Pa s, gemessen an einer 2 %igen wäßrigen Lösung bei 20˚C mit einem Höppler-Viskosimeter (®Tylose H 4000 P2 der Clariant Deutschland GmbH) |
| Glycerin-Monooleat | (®Arlacel 186 der Fa. Uniquema; zu ICI p.l.c.) |
| Lecithin Paraffinöl | medizinisches Weißöl ®Enerpar M 1930 der British Petroleum (BP) p.l.c. |

Beispiele 1 und 2 sowie Vergleichsbeispiel V 1

(Herstellung biaxial orientierter Hüllen)

Die in Tabelle 1 für jedes Beispiel genannten Komponenten wurden bei Raumtemperatur mechanisch durchmischt. Jedes Gemisch wurde dann in einem Einschneckenextruder bei 220 ˚C zu einer homogenen Schmelze plastifiziert und bei 190˚C durch eine Ringdüse zu einem Primärschlauch extrudiert. Der Schlauch wurde schnell abgekühlt, dann auf die zum Verstrecken erforderliche Mindesttemperatur (etwa 70 ˚C) erwärmt, mit Hilfe von innen wirkender Preßluft biaxial verstreckt und anschließend in einer weiteren Heizzone thermofixiert. Durch die Thermofixierung reduzierte sich die Querverstreckung um etwa 10 %. Die fertigen Hüllen wurden flachgelegt und zu Rollen aufgewickelt.

Die Streckverhältnisse der fertigen Nahrungsmittelhullen sowie deren Wandstärken sind ebenfalls aus Tabelle 1 ersichtlich. Alle Hüllen wurden mit einem Enddurchmesser von 38,2 mm entsprechend einer Flachbreite von 60 mm hergestellt. Der Primärschlauch-Durchmesser wurde nicht angegeben; er läßt sich leicht errechnen, indem man den Enddurchmesser (38,2 mm) durch den angegebenen Gesamtquerreckgrad dividiert.

Tabelle 1: Herstelldaten für Hüllenbeispiele

| | Beispiele | | |
|---|---|---|---|
| | 1 | 2 | V1 |
| Polyamid [Gew.-%] | PA1　30<br>PA2　33 | PA2　70 | PA1　65<br>PA2　33 |
| hydrophile Komponente | PEA　35 | PVAL　25 | - |
| weitere Komponente(n) [Gew.-%] | MB　2 | MB　3<br>Glycerin　3 | MB　2 |
| Gesamtquerreckgrad | 2,73 | 2,93 | 2,73 |
| Gesamtlängsreckgrad | 2,75 | 2,64 | 2,75 |
| Wandstärke des Endschlauchs | 25 $\mu$m | 27 $\mu$m | 24 $\mu$m |
| Wasseraufnahme des Schlauchs [Gew.-%] | 14,5 | 18,7 | 9,1 |

Beispiele 3 bis 6 sowie Vergleichsbeispiele V 2 und V3

(Herstellung von Raupen)

Zur Herstellung der Raupen wurde eine handelsübliche Mehrdorn-Raffmaschine (Fa. Kollross) verwendet, die nach dem Schneckenverfahren arbeitet (rotierendes Raffelement, das innen als Wendel geformt ist). Die Maschine war mit einem Revolver-Wechselsystem für die insgesamt 6 Raffdorne ausgerüstet. Für auf die Schlauchinnenoberfläche aufzubringende Flüssigkeiten besaß jeder Raffdorn innen Kanäle. die in eine am Ende des Dorns angeordnete Zerstäuberdüse mündeten. Weiterhin enthielt die Maschine Düsen zum Bespühen der Außenoberfläche des Schlauchs. Bei allen Versuchen wurden die Hüllen außen mit einer geringen Menge Paraffinöl besprüht. Dies diente dazu, die Reibung zwischen Schlauch und Raffelement gering zu halten und ein Entstehen von Beschädigungen zu vermeiden. Die Raffmaschine enthielt einen einstellbaren Anschlag für die jeweils gerade gebildete Raupen. Über diesen wurden die Raupen während des Abschneidens des Schlauchendes auf einer vorgegebene Länge (Preßlänge) von 400 mm komprimiert gehalten. Jede Raupe verblieb auf ihrem Raffdorn bis das Revolversystem ca. eine dreiviertel Umdrehung vollzogen hatte; anschließend wurde sie automatisch vom Dorn abgeschoben und seitlich ausgestoßen.

Einheitliche Parameter:

- Flachbreite der Hüllen: 60 mm ($\Rightarrow$ Fläche pro Laufmeter = 1200 cm$^2$)
- Durchlaufgeschwindigkeit beim Besprühen und Raffen = 175 m/min
- Rafflänge je Raupe = 50 m
- Preßlänge einer Raupe (beim Raffen aufgezwungen) = 400 mm $\Rightarrow$ Raffverhältnis (Kompressionsfaktor) = 125
- Verweildauer Raupe auf Raffdorn (bis zum Ausstoß aus der Maschine) = 3 min

Tabelle 2 gibt die bei den Raff-Versuchen verwendeten Hüllen sowie Art und Menge der innen aufgesprühten Beschichtungen an. Weiterhin enthält die Tabelle die an den fertigen Raupen ermittelten Prüfwerte zur Eigenstabilität (Längs-Expansion und Bruchkraft).

Die Werte zeigen deutlich die Überlegenheit der erfindungsgemäßen Beispiele gegenüber den Vergleichsversuchen.

Tabelle 2: Herstell- und Prüfdaten der Raupen

| Beispiel Nr. | Hüllenmaterial | Komponenten-Sprühlösung [Gew.-%] | | Antragsmenge [l/h] | Auftragsmenge Celluloseether* [mg/m²] | Längs-Expansionsfaktor Δ [%] | Bruchkraft [N] |
|---|---|---|---|---|---|---|---|
| 3 | wie Beispiel 1 | CMC-NA<br>Glycerin-monooleat<br>Lecithin<br>Paraffinöl | 2<br>0,3<br>0,3<br>0,8 | 5 | 78 (= 9,4 mg/m) | 5 | 140 |
| 4 | wie Beispiel 1 | M-HEC<br>Glycerin-monooleat | 3<br>0,5 | dito | dito | 6 | 125 |
| 5 | wie Beispiel 2 | CMC-NA<br>Glycerin-monooleat<br>Lecithin<br>Paraffinöl | 2<br>0,3<br>0,3<br>0,8 | 6 | 95 (= 11,4 mg/m) | 4 | 180 |
| 6 | wie Beispiel 2 | M-HEC<br>Glycerin-monooleat | 3<br>0,5 | dito | dito | 5 | 135 |
| V2 | wie Beispiel V1 | CMC-NA<br>Glycerin-monooleat<br>Lecithin<br>Paraffinöl | 2<br>0,3<br>0,3<br>0,8 | 5 | 78 | ∞ Raupe instabil | nicht bestimmbar (Raupe gibt stetig dem Druck nach) |
| V3 | wie Beispiel 1 | reines Wasser | | 5 | - | 12 | ca. 50 (kein definierter Bruch) |
| * errechnet aus Antragsmenge, Konzentration des Celluloseethers, Durchlaufgeschwindigkeit und Hüllenoberfläche | | | | | | | |

**Patentansprüche**

1. Geraffte, schlauchförmige Nahrungsmittelhülle auf Basis von thermoplastischem Kunststoff, die **dadurch gekennzeichnet ist, daß** der thermoplastische Kunststoff ein Blend aus mindestens einem Polyamid und/oder Copolyamid und mindestens einer hydrophilen Komponente umfaßt, daß die Hülle biaxial streckorientiert ist und daß sie innen und/oder außen mit mindestens einer Komponente imprägniert ist, die die Falten der Hülle aneinander haften läßt.

2. Geraffte Nahrungsmittelhülle gemäß Anspruch 1, **dadurch gekennzeichnet, daß** das (Co-)Polyamid ein aliphatisches (Co-)Polyamid, bevorzugt ein lineares aliphatisches (Co-)Polyamid ist.

3. Geraffte Nahrungsmittelhülle gemäß Anspruch 1 oder 2, **dadurch gekennzeichnet, daß** die hydrophile Komponente ein natürliches und/oder synthetisches Polymer ist, das mindestens 20 Gew.-%, bevorzugt mindestens 40 Gew.-%, seines Eigengewichts an Wasser aufnehmen kann.

4. Geraffte Nahrungsmittelhülle gemäß Anspruch 3, **dadurch gekennzeichnet, daß** das natürliche Polymer ein Polysaccharid ist.

5. Geraffte Nahrungsmittelhülle gemäß einem oder mehreren der Ansprüche 1 bis 3, **dadurch gekennzeichnet, daß** die hydrophile Komponente ein wasserlösliches synthetisches Polymer ist.

6. Geraffte Nahrungsmittelhülle gemäß Anspruch 4, **dadurch gekennzeichnet, daß** das wasserlösliche synthetische Polymer ein Polyvinylalkohol, ein Vinylpyrrolidon-(Co-)Polymer, ein Polyalkylenglykol, ein (Co-)Polymer mit Einheiten von N-Vinylalkylamiden oder ein (Co-)Polymer mit Einheiten von (Meth)acrylsäure oder (Meth)acrylamid ist.

7. Geraffte Nahrungsmittelhülle gemäß einem oder mehreren der Ansprüche 1 bis 3, **dadurch gekennzeichnet, daß** die hydrophile Komponente ein Polyetheramid, Polyesteramid, Polyetheresteramid oder Polyamidurethan ist.

8. Geraffte Nahrungsmittelhülle gemäß einem oder mehreren der Ansprüche 1 bis 7, **dadurch gekennzeichnet, daß** das zum Imprägnieren eingesetzte Komponente ein wasserlöslicher Celluloseether, bevorzugt Methylcellulose, Carboxymethylcellulose, Carboxymethyl-hydroxyethyl-cellulose, Hydroxyethyl-cellulose, Methyl-hydroxyethyl-cellulose, Carboxymethylcellulose-Na-Salz, Carboxymethyl-hydroxyethyl-cellulose-Na-Salz, und/oder ein Polyalkylenglykol, bevorzugt ein Polyethylenglykol mit einem Molekulargewicht $M_n$ im Bereich 200 bis 1500 oder ein Polyalkylenglykol-mono- oder -dialkylether, ist.

9. Geraffte Nahrungsmittelhülle gemäß einem oder mehreren der Ansprüche 1 bis 8, **dadurch gekennzeichnet, daß** sie auf der Innen- und/oder Außenseite mit etwa 2 bis 500 mg/m$^2$, bevorzugt etwa 20 bis 250 mg/m$^2$, besonders bevorzugt etwa 50 bis 150 mg/m$^2$, einer Komponente mit Hafteigenschaften beschichtet ist, wobei die Komponente bevorzugt mindestens ein Polymer mit Hafteigenschaften umfaßt.

10. Geraffte Nahrungsmittelhülle gemäß einem oder mehreren der Ansprüche 1 bis 9, **dadurch gekennzeichnet, daß** die Hülle in einem Flächenstreckverhältnis von 6 bis 18, bevorzugt von 8 bis 11, verstreckt ist.

11. Geraffte Nahrungsmittelhülle gemäß einem oder mehreren der Ansprüche 1 bis 10, **dadurch gekennzeichnet, daß** die Hülle thermofixiert ist.

12. Geraffte Nahrungsmittelhülle gemäß einem oder mehreren der Ansprüche 1 bis 11, **dadurch gekennzeichnet, daß** die Hülle einschichtig ist.

13. Geraffte Nahrungsmittelhülle gemäß einem oder mehreren der Ansprüche 1 bis 12, **dadurch gekennzeichnet, daß** die Wandstärke der Hülle 12 bis 60 $\mu$m, bevorzugt von 20 bis 45 $\mu$m, beträgt.

14. Geraffte Nahrungsmittelhülle gemäß einem oder mehreren der Ansprüche 1 bis 13, **dadurch gekennzeichnet, daß** die Hülle 10 bis 50 Gew.-% an Wasser aufnehmen kann, bezogen auf ihr Trockengewicht.

15. Geraffte Nahrungsmittelhülle gemäß einem oder mehreren der Ansprüche 1 bis 14, **dadurch gekennzeichnet, daß** das Raffverhältnis 80 : 1 bis 500 : 1, bevorzugt 100 : 1 bis 400 : 1, beträgt.

16. Verwendung der gerafften Nahrungsmittelhülle gemäß einem oder mehreren der Ansprüche 1 bis 15 als künstliche Wursthülle bei der Herstellung von Koch- und Brühwürsten sowie von Würstchen auf vollautomatisch arbeitenden Wurstfüll- und Clipvorrichtungen.

**Claims**

1. A shirred tubular food casing based on thermoplastic in which the thermoplastic comprises a blend of at least one polyamide and/or copolyamide and at least one hydrophilic component, and the casing is biaxially stretch-oriented and is impregnated on the inside and/or outside with at least one component which allows the pleats of the casing to adhere to one another.

2. The shirred food casing as claimed in claim 1, wherein the (co)polyamide is an aliphatic (co)polyamide, preferably a linear aliphatic (co)polyamide.

3. The shirred food casing as claimed in claim 1 or 2, wherein the hydrophilic component is a natural and/or synthetic polymer which can take up at least 20 % by weight, preferably at least 40 % by weight, of its own weight of water.

4. The shirred food casing as claimed in claim 3, wherein the natural polymer is a polysaccharide.

5. The shirred food casing as claimed in one or more of claims 1 to 3, wherein the hydrophilic component is a water-soluble synthetic polymer.

6. The shirred food casing as claimed in claim 4, wherein the water-soluble synthetic polymer is a polyvinyl alcohol, a vinylpyrrolidone (co)polymer, a polyalkylene glycol, a (co)polymer containing units of N-vinylalkylamides, or a (co)polymer containing units of (meth)acrylic acid or (meth)acrylamide.

7. The shirred food casing as claimed in one or more of claims 1 to 3, wherein the hydrophilic component is a polyether amide, polyester amide, polyether ester amide or polyamido urethane.

8. The shirred food casing as claimed in one or more of claims 1 to 7, wherein the component used for the impregnation is a water-soluble cellulose ether, preferably methylcellulose, carboxymethylcellulose, carboxymethylhydroxyethylcellulose, hydroxyethylcellulose, methylhydroxyethylcellulose, carboxymethylcellulose Na salt, carboxymethylhydroxyethylcellulose Na salt, and/or a polyalkylene glycol, preferably a polyethylene glycol having a molecular weight $M_n$ in the range 200 to 1500 or a polyalkylene glycol mono- or dialkyl ether.

9. The shirred food casing as claimed in one or more of claims 1 to 8, wherein it is coated on the inside and/or outside with about 2 to 500 $mg/m^2$, preferably about 20 to 250 $mg/m^2$, particularly preferably about 50 to 150 $mg/m^2$, of a component having adhesion properties, the component preferably comprising at least one polymer having adhesion properties.

10. The shirred food casing as claimed in one or more of claims 1 to 9, wherein the casing is stretched in an area stretching ratio of 6 to 18, preferably 8 to 11.

11. The shirred food casing as claimed in one or more of claims 1 to 10, wherein the casing is heat set.

12. The shirred food casing as claimed in one or more of claims 1 to 11, wherein the casing is single layered.

13. The shirred food casing as claimed in one or more of claims 1 to 12, wherein the wall thickness of the casing is 12 to 60 $\mu$m, preferably 20 to 45 $\mu$m.

14. The shirred food casing as claimed in one or more of claims 1 to 13, wherein the casing can take up 10 to 50 % by weight of water, based on its dry weight.

15. The shirred food casing as claimed in one or more of claims 1 to 14, wherein the shirring ratio is 80 : 1 to 500 : 1, preferably 100 : 1 to 400 : 1.

16. The use of the shirred food casing as claimed in one or more of claims 1 to 15 as artificial sausage casing in the production of cooked-meat sausages and scalded-emulsion sausages, and also of small sausages on fully automatic sausage stuffing and clipping apparatuses.

**Revendications**

1. Enveloppe en forme de boyau, plissée, pour produit alimentaire, à base de matière synthétique thermoplastique, qui est **caractérisée en ce que** la matière synthétique thermoplastique comprend un alliage d'au moins un polyamide et/ou copolyamide et d'au moins un composant hydrophile, **en ce que** l'enveloppe est orientée biaxialement par étirage et **en ce qu'**elle est imprégnée intérieurement ou extérieurement par au moins un composant qui fait adhérer les plis de l'enveloppe les uns aux autres.

2. Enveloppe plissée pour produit alimentaire selon la revendication 1, **caractérisée en ce que** le (co)polyamide est un (co)polyamide aliphatique, de préférence un (co)polyamide aliphatique linéaire.

3. Enveloppe plissée pour produit alimentaire selon la revendication 1 ou 2, **caractérisée en ce que** le composant hydrophile est un polymère naturel et/ou synthétique qui peut absorber au moins 20 % en poids, de préférence au moins 40 % en poids de son propre poids d'eau.

4. Enveloppe plissée pour produit alimentaire selon la revendication 3, **caractérisée en ce que** le polymère naturel est un polysaccharide.

5. Enveloppe plissée pour produit alimentaire selon une ou plusieurs des revendications 1 à 3, **caractérisée en ce que** le composant hydrophile est un polymère synthétique hydrosoluble.

6. Enveloppe plissée pour produit alimentaire selon la revendication 4, **caractérisée en ce que** le polymère synthétique hydrosoluble est un poly(alcool vinylique), un (co)polymère de vinylpyrrolidone, un polyalkylèneglycol, un (co)polymère à motifs de N-vinylalkylamides ou un (co)polymère à motifs d'acide (méth)acrylique ou (méth)acrylamide.

7. Enveloppe plissée pour produit alimentaire selon une ou plusieurs des revendications 1 à 3, **caractérisée en ce que** le composant hydrophile est un polyétheramide, polyesteramide, polyétheresteramide ou polyamide-uréthanne.

8. Enveloppe plissée pour produit alimentaire selon une ou plusieurs des revendications 1 à 7, **caractérisée en ce que** le composant utilisé pour l'imprégnation est un éther de cellulose hydrosoluble, de préférence la méthylcellulose, la carboxyméthylcellulose, la carboxyméthyl-hydroxyéthyl-cellulose, l'hydroxyéthylcellulose, la méthyl-hydroxyéthyl-cellulose, la carboxyméthylcellulose sodique, la carboxyméthyl-hydroxyéthylcellulose sodique et/ou un polyalkylèneglycol, de préférence un polyéthylèneglycol ayant une masse moléculaire $M_n$ dans la plage de 200 à 1 500 ou un éther mono- ou dialkylique de polyalkylèneglycol.

9. Enveloppe plissée pour produit alimentaire selon une ou plusieurs des revendications 1 à 8, **caractérisée en ce qu'**elle est revêtue sur la face interne et/ou la face externe avec environ 2 à 500 mg/m$^2$, de préférence environ 20 à 250 mg/m$^2$, de façon particulièrement préférée environ 50 à 150 mg/m$^2$, d'un composant à propriétés adhésives, le composant comprenant de préférence au moins un polymère à propriétés adhésives.

10. Enveloppe plissée pour produit alimentaire selon une ou plusieurs des revendications 1 à 9, **caractérisée en ce que** l'enveloppe est étirée en un rapport d'étirage surfacique de 6 à 18, de préférence de 8 à 11.

11. Enveloppe plissée pour produit alimentaire selon une ou plusieurs des revendications 1 à 10, **caractérisée en ce que** l'enveloppe est thermofixée.

12. Enveloppe plissée pour produit alimentaire selon une ou plusieurs des revendications 1 à 11, **caractérisée en ce que** l'enveloppe est monocouche.

13. Enveloppe plissée pour produit alimentaire selon une ou plusieurs des revendications 1 à 12, **caractérisée en ce que** l'épaisseur totale de l'enveloppe va de 12 à 60 $\mu$m, de préférence de 20 à 45 $\mu$m.

14. Enveloppe plissée pour produit alimentaire selon une ou plusieurs des revendications 1 à 13, **caractérisée en ce que** l'enveloppe peut absorber 10 à 50 % en poids d'eau, par rapport à son poids sec.

**15.** Enveloppe plissée pour produit alimentaire selon une ou plusieurs des revendications 1 à 14, **caractérisée en ce que** le rapport de plissage va de 80:1 à 500:1, de préférence de 100:1 à 400:1.

**16.** Utilisation de l'enveloppe plissée pour produit alimentaire selon une ou plusieurs des revendications 1 à 15, en tant qu'enveloppe artificielle pour saucisse, dans la fabrication de saucisses à cuire et à bouillir ainsi que de petites saucisses sur des dispositifs de remplissage et d'agrafage entièrement automatiques.